# EUROPEAN PATENT SPECIFICATION

(11) **EP 1 955 587 B1**
(45) Date of publication and mention of the grant of the patent: **16.09.2015**
(21) Application number: 08002092.8
(22) Date of filing: 05.02.2008
(51) Int. Cl.: A01G 9/10

(54) **Structure for cultivating plants out of the ground, particularly for producing cut flowers**
Vorrichtung zum Kultivieren von Pflanzen ausserhalb des Bodens, insbesondere zur Produktion von Schnittblumen
Dispositif pour la culture de plantes hors sol, notamment pour la production de fleurs coupées

(30) Priority: 07.02.2007 IT TO20070089
(43) Date of publication of application: 13.08.2008
(73) Proprietor: Talenti, Ilio, 18015 Riva Ligure (IM) (IT)
(72) Inventor: Talenti, Ilio, 18015 Riva Ligure (IM) (IT)
(74) Representative: Cian, Paolo

(56) References cited:
- WO-A-2006/108376
- FR-A- 2 354 700
- FR-A- 2 477 833
- GB-A- 929 647
- US-A- 4 312 152
- US-A- 4 453 344
- US-A- 5 507 116

## Description

The present invention relates in general to plant cultivation, particularly for producing cut flowers, and in particular to cultivation out of ground of such plants.

Structures intended to be used for cultivating plants or seeds are known. For example, GB-2 088 186 and US-3 667 159 describe seeding platforms adapted to receive seeds only in the first growth period thereof, and intended to be rested on the ground independently to each other. These platforms are made by moulding a foamed plastic material such as polystyrene, so as to define a series of conical seats in each of which a seed together with the respective earth is arranged. At the end of the first growth period of the seed, each little plant must be potted into another container.

Beyond to the fact that these known platforms are intended only for the initial growth of seeds, their contact with the ground, if it is not adequately treated by using antiparasitic agents, may favour the contamination of the little plants by the parasites which are present in the ground.

Moreover, EP-1 459 620 discloses a platform for cultivating plants, made by a plastic material in order to have thin walls and to define a plurality of containers which delimit shaped seats, each of which is adapted to receive a plant with the respective earth. Some containers of the platform are provided with a lower tubular body, in order to allow the platform to be kept in a condition raised with respect to the ground independently from other possible platforms. The platform of this document, because of its thin wall structure, is not adapted to thermally insulate the plants which are present in its containers in order to keep them in a condition of an ideal temperature for growth, neither it is adapted to be associated with other platforms in order to make a wide modular cultivation structure adapted to optimize the space inside an intensive cultivation area.

In particular, the present invention relates to a structure for cultivating plants out of ground, particularly for producing cut flowers, of the type defined in the preamble of claim 1.

Such a structure is known for example by US-A-4 453 344. Also US-A-5 507 116, US-A-4 312 152 and GB-A-929 647 disclose, at least in general terms, a structure of the type defined above.

In order to overcome the drawbacks of the prior art, the subject of the invention is a cultivating structure of the type defined in the annexed claims.

The structure of the invention intends in particular to provide a modular structure for the intensive cultivation of plants out of ground, which can be used for cultivating plants both inside greenhouses or in open areas, and which allows to keep the plants perfectly separated from the ground in order to prevent their contamination by parasites of the earth and to avoid that fertilizers used during the growth of the plants may pollute the ground, keeping at the same time the plants received in the platforms of the structure in a condition of an ideal temperature for growth.

Further characteristics of the invention will turn out to be more evident from the following detailed description, which has been provided only as a non-limitative example and is referred to the appended drawings in which:

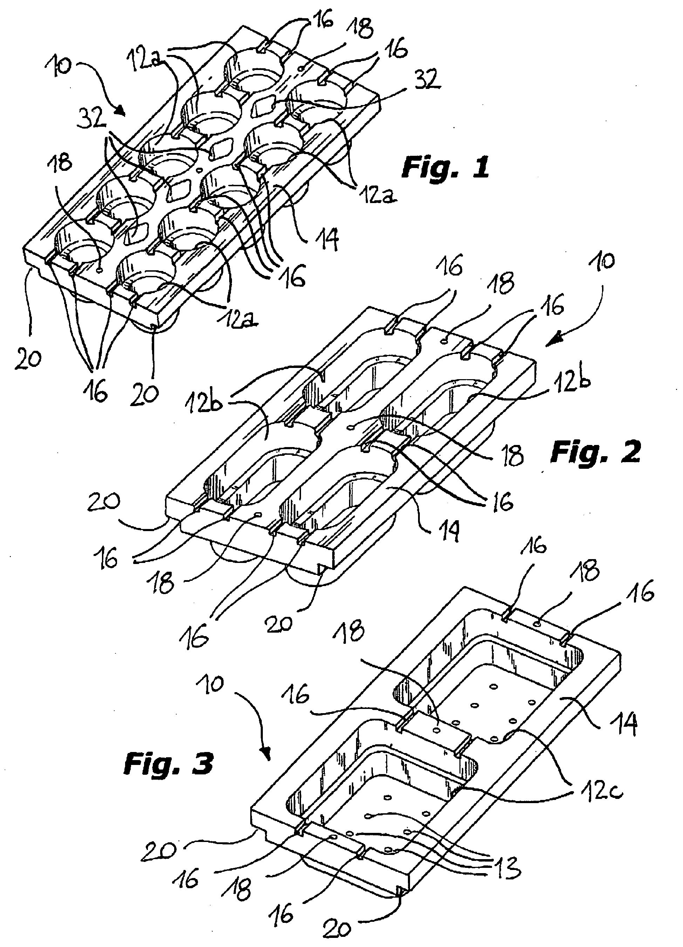

figures 1 to 3 are similar perspective views of three modifications of platforms of the structure according to the invention,

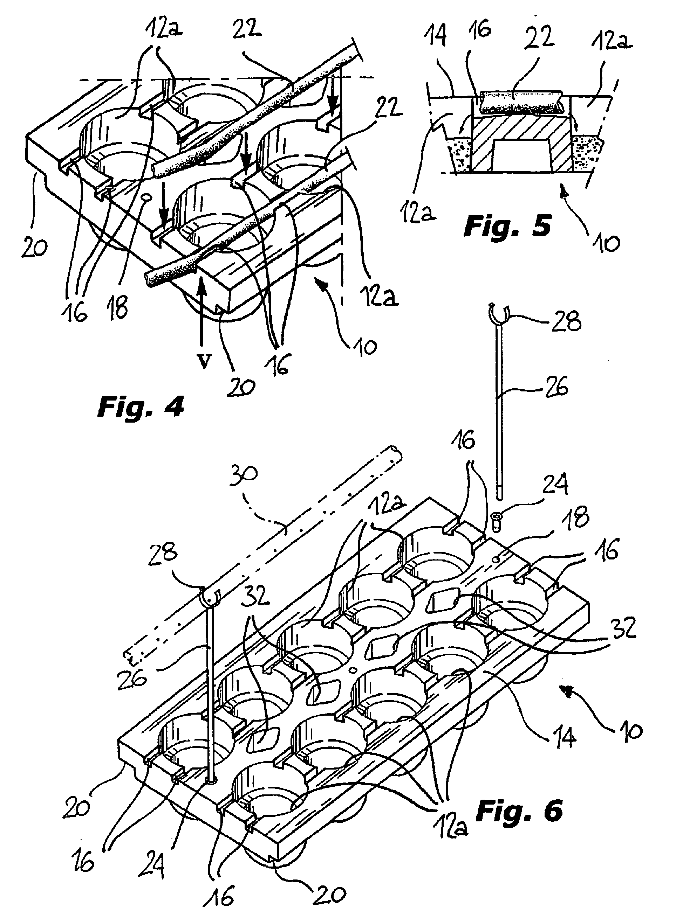

figure 4 is an enlarged perspective view showing the arrangement of droplet irrigation pipes on a platform,
figure 5 is a fragmentary and sectioned view of a detail indicated by arrow V in figure 4,
figure 6 is a perspective view of a sprinkle irrigation pipe which can be associated with a platform in a raised position,
figure 7 is a perspective exploded view of the main members of a structure according to the invention,
figure 8 is a perspective view of a structure of the invention in its assembled condition,
figure 9 is a front elevational view from arrow IX of figure 8, showing a first modification of a support member of the structure,
figure 10 is an enlarged perspective view of a foot element indicated by arrow X in figure 8,
figure 11 is a front elevational view similar to figure 9, showing a second modification of a support member of the structure,
figure 12 is a perspective view of a third modification of a support member of the structure,
figure 13 is a perspective schematic view of support means of the structure of the invention, including a support member of the type shown in figure 12,
figure 14 is an enlarged perspective view of a box-shaped body indicated by arrow XIV of figure 7, which can be associated with a support member for holding a respective auxiliary upright, and
figure 15 is a perspective view of the box-shaped body of figure 14, in its condition assembled on a support member.

With reference to the figures, a modular structure according to the invention, adapted to allow cultivation of plants out of ground, in particular plants for producing cut flowers, comprises a bench structure including a plurality of cultivation platforms generally indicated 10, arranged side by side and aligned longitudinally, and supported at a distance from the ground by support means 34.

Each platform 10 has a substantially rectangular shape in plan, with a plurality of cavities delimited downwards by a bottom wall usually pierced by holes 13, each cavity defining a container intended to receive a plant with the relative earth during all its period of growth.

Although the containers of each platform commonly have a conical shape with a circular base 12a, they may have any shape, such as an oval cross-section shape 12b, more extended in the longitudinal or in the transverse direction, or a square shape 12c, and may have any dimension as a function of the type of plant and of the amount of earth they will have to contain.

Conveniently, each platform 10 is made by a plastic material, and so that the walls thereof are able to get an effect of thermal isulation toward the outer environment, for the plants contained in the containers 12a, 12b or 12c.

In particular, the platforms 10 may be made by a foamed plastic material such as polystyrene or similar, or by a pair of half-shells arranged side by side and connected at respective edges in order to delimit an inner air chamber, or by a plastic material deriving from other known workings.

A series of guide ducts 16 aligned along the longitudinal direction of the platforms themselves are formed integrally and parallel to the upper surface 14 of the platforms 10, which open at opposite sides into the containers 12a, 12b or 12c and are intended to receive a portion of a droplet irrigation pipe 22, of a type known per se, in order to keep it firmly in its position when such a pipe will be associated longitudinally with a series of adjacent platforms 10 in order to irrigate them.

Preferably, the areas of the platforms 10 in which the guide ducts 16 are formed, have an arched or overturned V configuration, in order to allow that possible water droplets which might lie in the channels 16 may fall in one or the other of the two adjacent containers 12a, 12b or 12c.

Moreover, each platform 10 has engagement formations made by holes transverse to the surface 14, in order to allow the insertion of hollow coupling sleeves 24. An end portion of a rod 26 is engaged in the sleeves 24, which rod supports at its opposite end a fork coupling formation 28, and which constitutes a holding arm adapted to support a sprinkle irrigation pipe 30 in a position raised with respect to the platforms 10.

Thermal conditioning means of a type per se known, usually including pipes (not shown) in which a warm fluid flows, may be associated below the platforms 10 by support brackets, for example in the longitudinal cavity defined between the containers 12a or 12b. Conveniently, a series of through openings 32 (only shown with reference to the platform 10 provided with the containers 12a) are formed in the platform 10 above such a longitudinal cavity, which openings are adapted to allow the passage of the warm air from below the platform 10, starting from a zone close to the thermal conditioning means, to above the platform 10 where the plants to be cultivated are arranged.

In the case of the platform 10 provided with the containers 12c, through holes (not shown) may be provided in the flanks of such containers, which holes extend in the longitudinal direction of the platform in order to allow the insertion of the conditioning pipes in such a manner that they may be incorporated in the earth contained in the containers 12a. A warm fluid can be fed into these pipes in order to heat the earth and the roots of the plants to be cultivated during the cold season, or a cooled fluid in order to cool the earth and the roots during the warm season, in the event of particular cultivations.

A series of platforms 10 arranged adjacent and aligned in the longitudinal direction is supported at a distance from the ground by support means 34, which have also a modular structure. Such support means 34 comprise essentially a pair of longitudinal members 36 adapted to be inserted in corresponding longitudinal seats 20 formed integrally on the lower surface of the platforms 10, as well as a series of stand members, indicated in general by reference numeral 38, which allow to support the longitudinal members 36 to a predetermined height with respect to the ground.

Preferably, the longitudinal members 36 are made by metallic profiled sections having an overturned U cross-section, mutually connected to each other at the ends by means of male/female coupling elements, in such a manner to allow to reach a length corresponding to the longitudinal extension of the structure to be used. Moreover, generally C-shaped elastic clip members (not shown in the figures) may be used in order to connect more firmly the platforms 10 to the longitudinal members 36, which can be snap engaged at predetermined positions of the platforms, for example in a central portion of their longer sides, so as to lock jointly the platforms 10 with respect to the longitudinal members 36.

The stand members 38, which are conveniently of plastic material such as polyethylene or similar, may be made in a different manner depending on the load they will have to support or on the desired height of the platforms 10 with respect to the ground, as a consequence of the type of plants to be cultivated.

In the most general case, the stand members 38 include a support member in the shape of a flat frame (indicated in the figures by reference numerals 40a, 40b, 40c), and at least a foot member 44, having also a flat structure. Each flat frame support member may be connected with one or two foot members arranged according to a perpendicular configuration, by means of a snap connection, so as to make the assemblying step of the whole structure fast and easy.

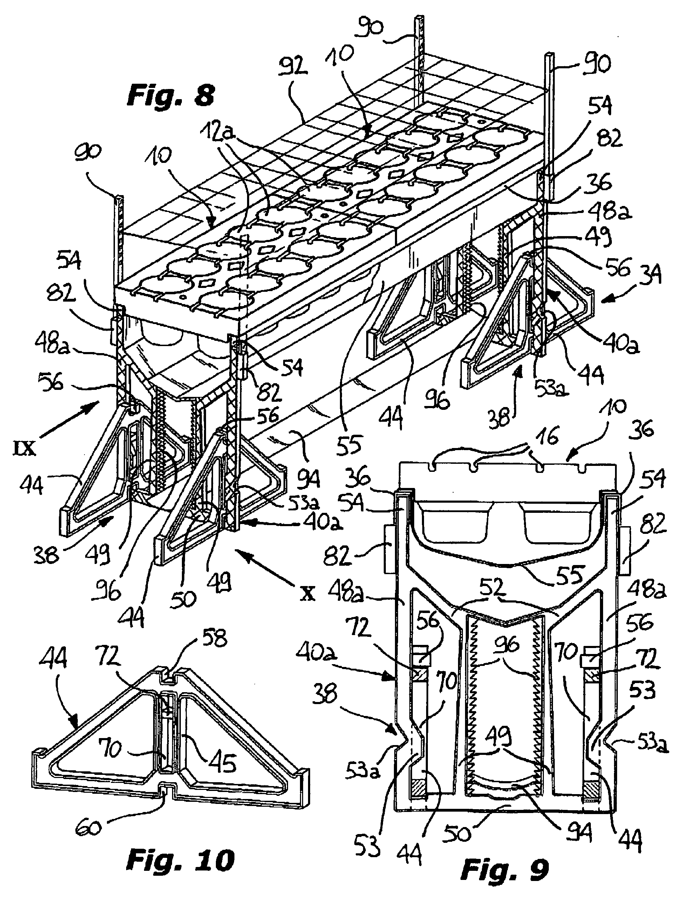

Each foot member 44 (see in particular figure 10) has a generally triangular shape with a vertical reinforcing upright 45. A longitudinal slit 70 is formed inside the upright 45 in a position closer to the vertex thereof, which is interrupted by a transversal plate 72. At the vertex and at the center of the base side of each foot member 44, respective opposite hollow seats 58 and 60 are formed, whose function will be made more clear in the following.

Moreover, at the base vertices of each foot member 44 respective vertical through holes (not shown in the figures) may be formed in order to allow the insertion of nails intended to fasten the structure to the ground.

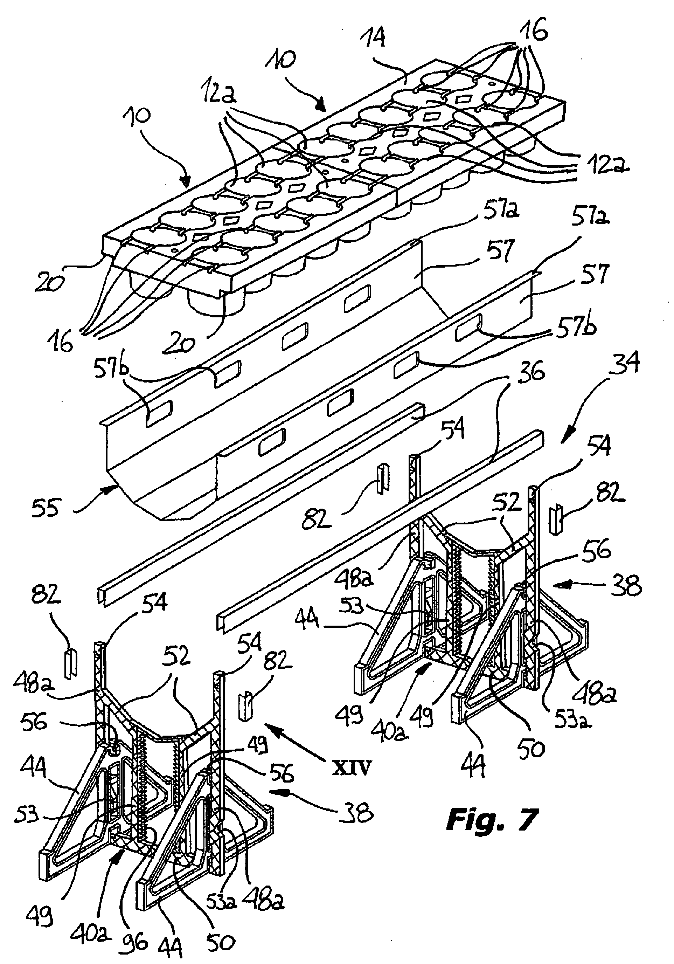

A first modification of a support element, shown in figures 7, 8 and 9, consists of a flat frame 40a intended to be associated with two foot members 44. The frame 40a includes a pair of vertical side uprights 48a connected downwards by a crosspiece 50 and upwards by a saddle structure which comprises a pair of tilted rods arranged substantially according to a V configuration. A pair of secondary vertical uprights 49 extend between the rods 52 and the crosspiece 50. The side uprights 48a end upwardly with finger appendages 54 projecting upwards to engage the inner cavity of the longitudinal members 36.

A bracket member 56, intended to be inserted in the upper seat 58 of the respective foot member 44 when it is assembled, extends from each side upright 48a towards the opposite upright 48a, while the lower seat 60 of the same foot member 44 is engaged by a portion of the crosspiece 50. Each upright 48a, in a portion thereof close to the crosspiece 50, has a projection 53 projecting towards the inside of the frame 40a and intended to be inserted in the slit 70 of the respective foot member 44, in order to connect more firmly the foot members 44.

A recess 53a is formed in a position corresponding to each projections 53 but on the outer side of the respective upright 48a, from which a tilted hole (not shown in the figures) extends, which crosses the upright 48a and also a portion of the crosspiece 50, in order to allow to insert a nail for fastening the structure to the ground.

A series of channel shaped elements 55 are preferably interposed between the platforms 10 and the longitudinal members 36, preferably made by a molded plastic material, for example PET, and rested one on the other at their longitudinal ends so as to form a single channel whose extension is equal to that of the whole structure, in order to collect water falling from the holes 13 of the bottom of the containers 12a, 12b or 12c, and to direct it up to the end of the structure, so as to avoid it may fall directly on the ground. Each channel element 55 has vertical side walls 57 provided with folded edges 57a adapted to be supported on the longitudinal members 36, at the longitudinal seats 20 of the platforms 10, in order to keep the elements 55 associated with the support means 34.

Preferably, a series of windows 57b is formed on the side walls 57 of the elements 55 in order to avoid the moisture may stagnate and produce condensate inside the elements 55.

In the event the structure of the invention has to be used on a level ground so that the channel formed by the elements 55 does not have a sufficient slope to assure the correct outflow of the water, the elements 55 may be pierced at a bottom portion thereof and gutter elements 94 (figures 8 and 9) may be associated with the series of frame 40a of the structure so as to allow that a gutter is made below the elements 55. Each gutter element 94 has a central concave portion from whose opposite sides a pair of longitudinal edges extend, intended to be inserted between the teeth of a pair of opposite serrations 96 formed integrally on the secondary uprights 49 of the support element 40a. In particular, by virtue of the presence of such serrations 96, the slope of the gutter elements 94 may be easily adjusted between one frame 40a and the subsequent one, in order to allow to obtain a drain channel having the desired slope.

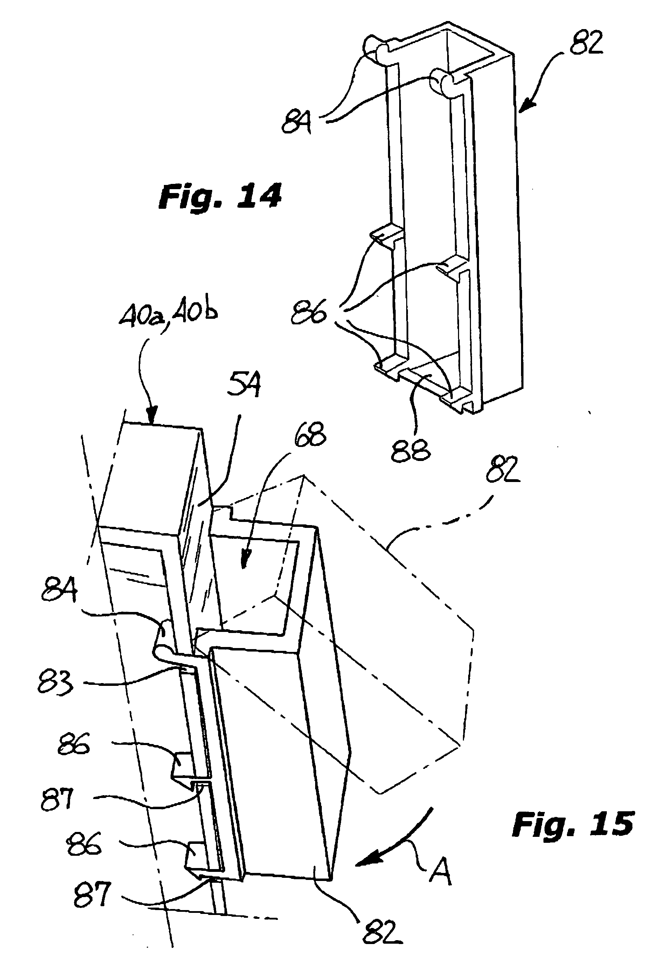

Each side upright 48a of the support elements 40a has a series of seats 83 and 87 in proximity of the respective finger appendage 54, so that connection of a box-shaped body 82 (see in particular figures 14 and 15) having a bottom wall 88 and intended to define a holding pocket 68 is allowed. Each body 82 comprises in particular a pair of upper appendages 84 each having its free end rounded and adapted to be inserted in the seats 83 of the uprights 48a with possibility of rotation, as well as a plurality of tooth appendages 86 intended to snap engage the seats 87 of the same uprights.

In order to connect a body 82 to an upright 48a, firstly the appendages 84 threof are inserted in the seats 83 of an upright 48a, so that the body 82 assumes the dashes line position of figure 15 and then, as a result of a rotation of the body 82 in the direction indicated by arrow A of figure 15, the body 82 is brought into a configuration parallel to the upright 48a, until its appendages 86 penetrate in the seats 87.

In the pockets 68 so made, respective auxiliary uprights 90, for example provided with a series of hook formations, can be inserted, which allow to support a net 92 intended for supporting the stalks of the plants arranged on the platforms 10 during the growth thereof, with an adjustable height.

As an alternative or in combination, the pockets 68 may be used for receiving support uprights of a removable laminar cover (not shown) adapted to define a greenhouse structure superimposed to the platforms 10.

The aforesaid series of seats 83 and 87 for the engagement of the appendages 84 and 86 of a body 82 may be made, besides that in proximity of each finger appendage 54, also in a lower zone of a side upright 48a, for example in proximity of the recesses 53a. In this case, according to a modification not shown, the bodies 82 are not provided with the bottom wall 88, so that an auxiliary upright 90 associated with a side upright 48a of a support element 40a will have a length greater than that represented in figure 8, so as to engage simultaneously two bodies 82 associated with the same upright 48a at different heights, in order to assure a more firm positioning of the upright 90.

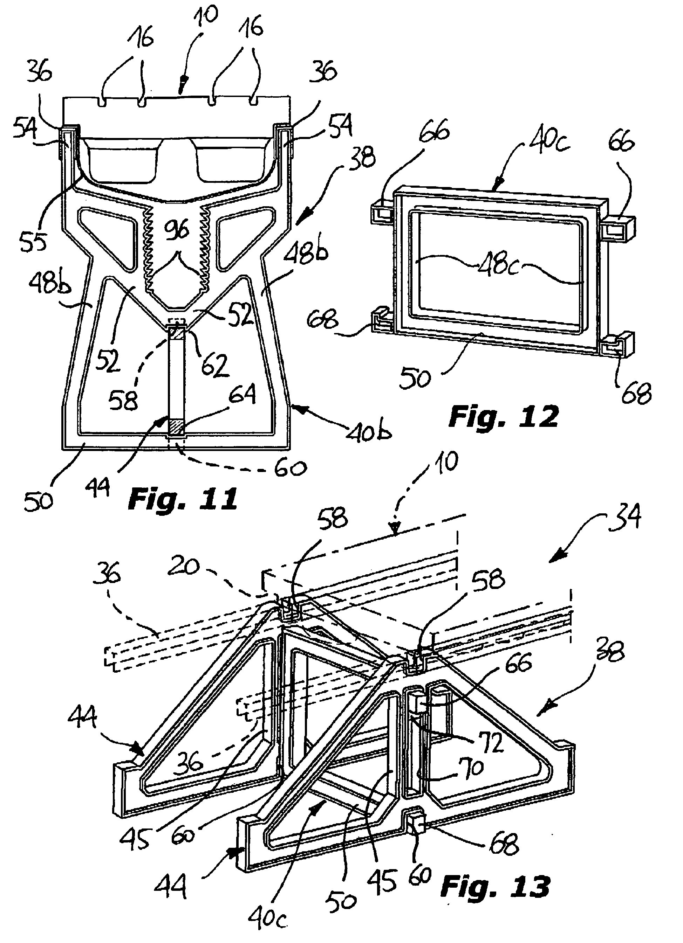

In a second modification of the support element shown in figure 11, in which similar reference numerals have been used to indicate parts equal or similar to those of the previous modification, and for which only the parts different from the previous modification will be described, the support element is indicated by reference 40b.

The element 40b has a flat frame shape with its side uprights 48b tilted and connected by a pair of rods 52 arranged according to a V configuration so as to define a vertex facing the lower crosspiece 50 of the respective frame. In this case, a single foot member 44 is associated with the support element 40b, whose upper and lower seats 58 and 60 are adapted to snap engage a fork formation 62 at the vertex defined by the rods 52, and a seat 64 formed centrally on the crosspiece 50, respectively.

In a third modification of the support element shown in figures 12 and 13, in which similar reference numerals have been used to indicate parts equal or similar to those of the previous modification, and for which only the different parts are described, the support element is indicated by reference 40c. In particular, this modification is adapted for cultivating plants with a higher stalk, the respective support element being usually smaller than those of the previous modifications.

The element 40c has a rectangular flat frame shape, and is intended to be associated with two foot members 44. Four opposite bracket formations extend sideways from the element 40c, two upper bracket formations 66 and two lower bracket formations 68, provided with an end projection. The upper bracket formations 66 are adapted to engage the upper seats 58 of the foot members 44 while the lower bracket formations 68 are intended to be inserted in their lower seats 60, respectively. In this case, the vertex portion of the foot members 44, which extends beyond the top of the element 40c, engages directly the hollow seat of the longitudinal members 36.

## Claims

1. Structure for cultivating plants out of ground, particularly for producing cut flowers, comprising at least a cultivation platform (10) having at least a cavity (12a, 12b, 12c) in the form of a container intended to receive a plant with the respective earth, and support means (34) associated with said platform (10) in order to keep it raised with respect to the ground, the support means (34) being adapted to support a plurality of cultivation platforms (10) arranged according to a condition aligned side by side so as to make a modular structure, each cultivation platform (10) being made by molding a plastic material, in order that the walls of each platform (10) are able to provide a thermal insulation towards the outer environment, for the plants received in said containers (12a, 12b, 12c),
**characterized in that** said support means (34) include a pair of longitudinal members (36) which can be inserted into corresponding seats (20) formed integrally in the platforms (10), and which can be coupled with a plurality of stand members (38) adapted to support said longitudinal members (36).

2. Structure according to claim 1, **characterized in that** said cultivation platforms (10) are made by molding a foamed or similar plastic material, or consist of a pair of half-shells arranged side by side which delimit an air chamber.

3. Structure according to claim 1 or 2, **characterized in that** at least a guide duct (16) formed integrally in the upper surface (14) of the respective platform (10), opens into each container (12a, 12b, 12c) of the platforms (10) and is intended to receive a portion of a droplet irrigation pipe (22).

4. Structure according to claim 3, **characterized in that** said guide ducts (16) extend according to a direction longitudinal with respect to said platforms (10), so that a same droplet irrigation pipe (22) can engage a series of aligned guide ducts (16) of adjacent platforms (10).

5. Structure according to any one of claims 1 to 4, **characterized in that** the platforms (10) have engagement formations (18) each intended to receive an end portion of an arm (26) for holding a raised sprinkle irrigation pipe (30).

6. Structure according to any one of claims 1 to 5, **characterized in that** the longitudinal members (36) are made by mutually connectable profiled sections, having an overturned U cross-section.

7. Structure according to claim 6, **characterized in that** said profiled sections have end coupling means in order to allow the mutual connection thereof.

8. Structure according to claim 6 or 7, **characterized in that** it includes clip members adapted to fasten the platforms (10) with respect to said longitudinal members (36).

9. Structure according to any one of claims 6 to 8, **characterized in that** said stand members (38) include a support member (40a, 40b, 40c) and at least a foot member (44), in which said support and foot members (40a, 40b, 40c, 44) have generally flat configurations and can be mutually connected according to a perpendicular configuration.

10. Structure according to claim 9, **characterized in that** each foot member (44) has a generally triangular shape.

11. Structure according to claim 9 or 10, **characterized in that** each foot member (44) can be fastened to the respective support member (40a, 40b, 40c) by snap connection means.

12. Structure according to any one of claims 9 to 11, **characterized in that** each support member (40c) comprises a frame of a generally rectangular shape from which bracket formations (66, 68) extend sideways, which are adapted to engage in pairs a lower recess (60) and a vertical slit (70) of a respective foot member (44), a top portion of each foot member (44) being intended to be engaged by a portion of said longitudinal members (36).

13. Structure according to any one of claims 9 to 11, **characterized in that** each support member (40a, 40b) comprises a frame provided with a pair of side uprights (48a, 48b) connected below by a crosspiece (50) and above by a pair of tilted rods (52) arranged substantially according to a V configuration, said side uprights (48a, 48b) having respective appendages (54) which project upwardly for the engagement by a portion of said longitudinal members (36).

14. Structure according to claim 13, **characterized in that** said rods arranged substantially according to a V configuration (52) define a vertex facing the lower crosspiece (50) of the respective frame, snap engaging means (62, 64) been provided at said vertex and at a central portion of said crosspiece (50), respectively, for the engagement of corresponding seats (58, 60) of the respective foot member (44).

15. Structure according to claim 13, **characterized in that** the side uprights (48a) of each support member (40a) are substantially vertical and each of them is adapted to be associated with a respective foot member (44), each foot member (44) being provided with an upper seat (58) for inserting a bracket member (56) which extends from a respective side upright (48a) of the frame, and with a lower seat for the engagement of a portion of said crosspiece (50).

16. Structure according to claim 15, **characterized in that** each side upright (48a) has a projection (53) adapted to be inserted in a slit (70) of the respective foot member (44).

17. Structure according to any one of claims 13 to 16, **characterized in that** the side uprights (48a, 48b) of each support member (40a, 40b) have seats (83, 87) for snap engaging a box-shaped body (82) adapted to define a pocket for holding a respective auxiliary upright (90), a plurality of said auxiliary uprights (90) being adapted to support a net (92) for supporting the stalks of the plants received in the containers (12a, 12b, 12c) of the platforms (10), or a removable laminar cover adapted to define a greenhouse structure superimposed to the platforms (10).

18. Structure according to any one of claims 1 to 17, **characterized in that** it comprises thermal conditioning means to be associated with each of said platforms (10) in order to heat or cool the plants contained in said containers (12a, 12b, 12c).

19. Structure according to claim 18, **characterized in that** it comprises bracket support means which can be associated below said platforms (10) and are adapted to support heating pipes, each platform (10) having a series of vertical through openings (32) formed above said heating pipes, in order to allow the heated air coming from said pipes to pass towards a zone above the platforms (10).

20. Structure according to claim 18, **characterized in that** it comprises holes formed in the containers (12c) of said platforms (10), in which holes pipes are inserted to which a refrigeration or heating fluid is fed in order to directly heat or cool the earth contained in said containers (12c).

21. Structure according to any one of claims 13 to 20, **characterized in that** a channel element (55) is interposed between said platforms (10) and the respective support means (34), which is adapted to collect water coming from holes (13) formed below in said containers (12a, 12b, 12c).

22. Structure according to claim 21, **characterized in that** it comprises gutter elements (94) which can be associated with the frame (40a, 40b) of the support members (34) with an adjustable slope by teeth support formations (96), in order to make sloped drain channels arranged below through holes formed in the bottom of said channel elements (55).

## Patentansprüche

1. Struktur zum Ziehen von Pflanzen aus Erde, insbesondere zur Herstellung von Schnittblumen, umfassend wenigstens eine Kultivierungs-Plattform (10) mit wenigstens einer Vertiefung (12a, 12b, 12c) in Form eines Behälters, der dazu ausgelegt ist, eine Pflanze mit der zugehörigen Erde aufzunehmen, und mit der Plattform (10) verbundene Stützmittel (34), um sie in Bezug zum Boden erhöht zu halten, wobei die Stützmittel (34) dazu ausgelegt sind, eine Vielzahl von Kultivierungs-Plattformen (10) zu tragen, die zur Bildung einer modularen Struktur entsprechend einer Vorgabe nebeneinander ausgerichtet angeordnet sind, wobei jede Kultivierungs-Plattform (10) durch Formung eines Kunststoffmaterials hergestellt ist, damit die Wände jeder Plattform (10) in der Lage sind, für die in den Behältern (12a, 12b, 12c) aufgenommenen Pflanzen eine thermische Isolation zur äußeren Umgebung zu schaffen, **dadurch gekennzeichnet, dass** die Stützmittel (34) ein Paar von Längsträgern (36) enthalten, die in zugeordnete Sitze (20), welche integral in den Plattformen (10) ausgebildet sind, eingefügt werden können, und die mit einer Vielzahl von Gestellelementen (38) koppelbar sind, welche dazu ausgelegt sind, die Längsträger (36) zu tragen.

2. Struktur nach Anspruch 1, **dadurch gekennzeichnet, dass** die Kultivierungs-Plattformen (10) durch Formung eines geschäumten oder ähnlichen Kunststoffmaterials hergestellt sind, oder aus einem Paar von nebeneinander angeordneten Halbschalen bestehen, die eine Luftkammer begrenzen.

3. Struktur nach Anspruch 1 oder 2, **dadurch gekennzeichnet, dass** wenigstens ein Führungskanal (16), der integral in der oberen Oberfläche (14) der jeweiligen Plattform (10) ausgebildet ist, in jeden Behälter (12a, 12b, 12c) der Plattformen (10) mündet und dazu ausgelegt ist, einen Teil einer Tröpfchenbewässerungsleitung (22) aufzunehmen.

4. Struktur nach Anspruch 3, **dadurch gekennzeichnet, dass** die Führungskanäle (16) sich bezogen auf die Plattformen (10) in Längsrichtung erstrecken, so dass eine gleiche Tröpfchenbewässerungsleitung (22) in eine Reihe von ausgerichteten Führungskanälen (16) von benachbarten Plattformen (10) eingreifen kann.

5. Struktur nach einem der Ansprüche 1 bis 4, **dadurch gekennzeichnet, dass** die Plattformen (10) Eingriffsausbildungen (18) haben, die jeweils dazu ausgelegt sind, einen Endabschnitt eines Arms (26) zum Halten einer erhöhten Beregnungsbewässerungsleitung (30) aufzunehmen.

6. Struktur nach einem der Ansprüche 1 bis 5, **dadurch gekennzeichnet, dass** die Längsträger (36) durch gegenseitig verbindbare Profilabschnitte gebildet werden, die einen umgedrehten U-Querschnitt aufweisen.

7. Struktur nach Anspruch 6, **dadurch gekennzeichnet, dass** die Profilabschnitte Endkupplungsmittel aufweisen, um die gegenseitige Verbindung derselben zu ermöglichen.

8. Struktur nach Anspruch 6 oder 7, **dadurch gekennzeichnet, dass** sie Clipelemente enthält, die dazu ausgelegt sind, die Plattformen (10) in Bezug zu den Längsträgern (36) zu befestigen.

9. Struktur nach einem der Ansprüche 6 bis 8, **dadurch gekennzeichnet, dass** die Gestellelemente (38) ein Stützelement (40a, 40b, 40c) und wenigstens ein Fußelement (44) enthalten, wobei die Stütz- und Fußelemente (40a, 40b, 40c, 44) im Allgemeinen flache Konfigurationen aufweisen und gegenseitig in einer rechtwinkligen Konfiguration verbunden sein können.

10. Struktur nach Anspruch 9, **dadurch gekennzeichnet, dass** jedes Fußelement (44) eine im Allgemeinen dreieckige Form hat.

11. Struktur nach Anspruch 9 oder 10, **dadurch gekennzeichnet, dass** jedes Fußelement (44) an dem jeweiligen Stützelement (40a, 40b, 40c) durch Schnappverbindungsmittel befestigt werden kann.

12. Struktur nach einem der Ansprüche 9 bis 11, **dadurch gekennzeichnet, dass** jedes Stützelement (40c) einen Rahmen von im Allgemeinen rechteckiger Form aufweist, von dem sich Klammer-Formationen (66, 68) seitlich erstrecken, die dazu ausgelegt sind, paarweise mit einer unteren Ausnehmung (60) und einen vertikalen Schlitz (70) eines jeweiligen Fußelements (44) in Eingriff zu kommen, wobei ein oberer Abschnitt jedes Fußelements (44) dazu ausgelegt ist, mit einem Abschnitt der Längsträger (36) in Eingriff gebracht zu werden.

13. Struktur nach einem der Ansprüche 9 bis 11, **dadurch gekennzeichnet, dass** jedes Stützelement (40a, 40b) einen Rahmen mit einem Paar von Seitenpfosten (48a, 48b) aufweist, die unten durch eine Querstrebe (50) verbunden und nach oben durch eine Paar von geneigten Stangen (52) verbunden sind, die im wesentlichen entsprechend einer V-Konfiguration angeordnet sind, wobei die Seitenpfosten (48a, 48b) jeweilige Fortsätze (54), haben, die zum Eingriff durch einen Abschnitt der Längsträger (36) nach oben ragen.

14. Struktur nach Anspruch 13, **dadurch gekennzeichnet, dass** die Stangen, die im wesentlichen entsprechend einer V-Konfiguration (52) angeordnet sind, eine Ecke gegenüber der unteren Querstrebe (50) des jeweiligen Rahmens definieren, wobei Schnappeingriffsmittel (62, 64) an der Ecke bzw. bei einem zentralen Abschnitt der Querstrebe (50) vorgesehen sind, für den Eingriff von entsprechenden Sitzen (58, 60) des jeweiligen Fußelements (44).

15. Struktur nach Anspruch 13, **dadurch gekennzeichnet, dass** die Seitenpfosten (48a) jedes Stützelements (40a) im wesentlichen vertikal sind und jedes von ihnen dazu ausgelegt ist, mit einem jeweiligen Fußelement (44) verbunden zu werden, wobei jedes Fußelement (44) mit einem oberen Sitz (58) zum Einsetzen eines Klammerelements (56), das von einem jeweiligen Seitenpfosten (48a) des Rahmens erstreckt, und mit einem unteren Sitz für den Eingriff eines Abschnitts der Querstrebe (50) versehen ist.

16. Struktur nach Anspruch 15, **dadurch gekennzeichnet, dass** jeder Seitenpfosten (48a) einen Vorsprung (53) aufweist, der dazu ausgelegt ist, in einen Schlitz (70) des jeweiligen Fußelements (44) eingesetzt zu werden.

17. Struktur nach einem der Ansprüche 13 bis 16, **dadurch gekennzeichnet, dass** die Seitenpfosten (48a, 48b) jedes Stützelements (40a, 40b) Sitze (83, 87) haben für einen Schnappeingriff eines kastenförmigen Körpers (82), der dazu ausgelegt ist, eine Tasche zum Halten eines jeweiligen Hilfs-Pfostens (90) zu definieren, wobei eine Vielzahl der Hilfspfosten (90) dazu ausgelegt ist, ein Netz (92) zum Stützen der Stiele der Pflanzen in den Behältern (12a, 12b, 12c) der Plattformen (10), oder eine abnehmbare laminare Abdeckung zu tragen, die dazu ausgelegt ist, eine auf die Plattformen (10) aufgesetzte Gewächshauskonstruktion zu definieren.

18. Struktur nach einem der Ansprüche 1 bis 17, **dadurch gekennzeichnet, dass** sie mit jeder der Plattformen (10) zu verbindende Thermokonditionierungsmittel aufweist, um die in den Behältern (12a, 12b, 12c) enthaltenen Pflanzen zu heizen oder zu kühlen.

19. Struktur nach Anspruch 18, **dadurch gekennzeichnet, dass** sie Klammerstützmittel aufweist, die unterhalb der Plattformen (10) verbunden werden können und die zum Halten von Heizungsrohren ausgelegt sind, wobei jede Plattform (10) eine Reihe von vertikalen Durchgangsöffnungen (32) hat, die oberhalb der Heizungsrohre gebildet sind, damit die erwärmte Luft aus den Rohren zu einer Zone oberhalb der Plattformen (10) durchkommen kann.

20. Struktur nach Anspruch 18, **dadurch gekennzeichnet, dass** sie Löcher in den Behältern (12c) der Plattformen (10) aufweist, in welchen Rohre eingesetzt sind, denen ein Kühl- oder Heizfluid zugeführt wird, um direkt die in den Behältern (12c) enthaltene Erde zu erwärmen oder zu kühlen.

21. Struktur nach einem der Ansprüche 13 bis 20, **dadurch gekennzeichnet, dass** ein Kanalelement (55) zwischen den Plattformen (10) und den jeweiligen Stützmitteln (34) eingefügt ist, das dazu ausgelegt ist, Wasser zu sammeln, das aus Löchern (13) kommt, die unten in den Behältern (12a, 12b, 12c) ausgebildet sind.

22. Struktur nach Anspruch 21, **dadurch gekennzeichnet, dass** sie Rinnenelemente (94) aufweist, die durch Zahnstützformationen (96) mit einer justierbaren Steigung mit dem Rahmen (40a, 40b) der Stützmittel (34) in Verbindung gebracht werden können, um geneigte Ablaufrinnen zu schaffen, die unter Durchgangslöchern angeordnet sind, welche im Boden der Kanalelemente (55) gebildet sind.

## Revendications

1. Structure pour cultiver des plantes en dehors de la terre, en particulier pour la production de fleurs coupées, comprenant au moins une plate-forme de culture (10) ayant au moins une cavité (12a, 12b, 12c) sous la forme d'un récipient destiné à recevoir une plante avec la terre correspondante, et des moyens de support (34) associés à ladite plate-forme (10) afin de la maintenir surélevée par rapport au sol, les moyens de support (34) étant adaptés pour supporter une pluralité de plates-formes de culture (10) disposées selon un état d'alignement côte à côte de manière à réaliser une structure modulaire, chaque plate-forme de culture (10) étant réalisée par moulage d'une matière plastique, afin que les parois de chaque plate-forme (10) soient aptes à fournir une isolation thermique vis-à-vis de l'environnement extérieur, pour les plantes reçues dans lesdits conteneurs (12a, 12b, 12c),
**caractérisée en ce que** lesdits moyens de support (34) comprennent une paire d'éléments longitudinaux (36) qui peuvent être insérés dans des sièges correspondants (20) formés d'un seul tenant dans les plates-formes (10), et qui peuvent être reliés à une pluralité d'éléments (38) destinés à être dressés, adaptés pour supporter lesdits éléments longitudinaux (36).

2. Structure selon la revendication 1, **caractérisée en ce que** lesdites plates-formes de culture (10) sont réalisées par moulage d'une matière plastique en mousse ou analogue, ou se composent d'une paire de demi-coquilles disposées côte à côte qui délimitent une chambre remplie d'air.

3. Structure selon la revendication 1 ou la revendication 2, **caractérisée en ce qu'**au moins un canal de guidage (16) formé dans la surface supérieure (14) de la plate-forme respective (10), débouche dans chaque récipient (12a, 12b, 12c) des plates-formes (10), et est destiné à recevoir une partie d'un tuyau d'irrigation goutte à goutte (22).

4. Structure selon la revendication 3, **caractérisée en ce que** lesdits canaux de guidage (16) s'étendent selon une direction longitudinale par rapport auxdites plates-formes (10), de sorte qu'un même tuyau d'irrigation goutte à goutte (22) peut s'engager dans une série de canaux de guidage (16) alignés de plates-formes adjacentes (10).

5. Structure selon l'une quelconque des revendications 1 à 4, **caractérisée en ce que** les plates-formes (10) ont des formations d'engagement (18) destinées chacune à recevoir une partie d'extrémité d'un bras (26) pour maintenir un tuyau soulevé (30) d'irrigation par aspersion.

6. Structure selon l'une quelconque des revendications 1 à 5, **caractérisée en ce que** les éléments longitudinaux (36) sont constitués par des portions de profilés mutuellement connectables, ayant une section transversale en U renversé.

7. Structure selon la revendication 6, **caractérisée en ce que** lesdites portions de profilés ont des moyens d'accouplement d'extrémité de manière à permettre le raccordement mutuel de celles-ci.

8. Structure selon la revendication 6 ou la revendication 7, **caractérisée en ce qu'**elle comprend des éléments d'attache adaptés pour fixer les plates-formes (10) par rapport auxdits éléments longitudinaux (36).

9. Structure selon l'une quelconque des revendications 6 à 8, **caractérisée en ce que** lesdits éléments (38) destinés à être dressés comprennent un élément de support (40a, 40b, 40c) et au moins un élément formant piètement (44), lesdits éléments de support et éléments formant piètement (40a, 40b, 40c, 44) ayant des configurations généralement plates et pouvant être mutuellement reliés selon une configuration perpendiculaire.

10. Structure selon la revendication 9, **caractérisée en ce que** chaque élément formant piètement (44) a une forme généralement triangulaire.

11. Structure selon la revendication 9 ou la revendication 10, **caractérisée en ce que** chaque élément formant piètement (44) peut être fixé à l'élément de support respectif (40a, 40b, 40c) par des moyens de connexion à enclenchement.

12. Structure selon l'une quelconque des revendications 9 à 11, **caractérisée en ce que** chaque élément de support (40c) comprend un châssis de forme générale rectangulaire à partir duquel des formations de support (66, 68) s'étendent latéralement, lesquelles sont adaptées pour venir en engagement dans des paires de renfoncements inférieurs (60) et dans une fente verticale (70) d'un élément formant piètement (44) respectif, une partie supérieure de chaque élément formant piètement (44) étant destinée à être amenée en engagement avec une portion desdits éléments longitudinaux (36).

13. Structure selon l'une quelconque des revendications 9 à 11, **caractérisée en ce que** chaque élément de support (40a, 40b) comprend un châssis muni d'une paire de montants latéraux (48a, 48b) reliée au niveau inférieur par une traverse (50) et au niveau supérieur par une paire de tiges inclinées (52) disposées sensiblement selon une configuration en V, lesdits montants latéraux (48a, 48b) ayant des appendices respectifs (54) qui font saillie vers le haut de façon à venir en engagement avec une portion desdits éléments longitudinaux (36).

14. Structure selon la revendication 13, **caractérisée en ce que** lesdites tiges (52) disposées sensiblement selon une configuration en V définissent un sommet faisant face à la traverse inférieure (50) du châssis respectif, des moyens de connexion par enclenchement (62, 64) étant prévus au niveau dudit sommet et dans une partie centrale de ladite traverse (50), respectivement, pour une venue en engagement avec des sièges correspondants (58, 60) de l'élément formant piètement (44) correspondant.

15. Structure selon la revendication 13, **caractérisée en ce que** les montants latéraux (48a) de chaque élément de support (40a) sont sensiblement verticaux, et chacun d'eux est adapté pour être associé à un élément formant piètement (44) respectif, chaque élément formant piètement (44) comprenant un siège supérieur (58) pour l'insertion d'un élément de support (56) qui s'étend depuis un montant latéral (48a) respectif du châssis, et comprenant un siège inférieur pour l'engagement d'une portion de ladite traverse (50).

16. Structure selon la revendication 15, **caractérisée en ce que** chaque montant latéral (48a) comporte une saillie (53) adaptée pour être insérée dans une fente (70) de l'élément formant piètement (44) respectif.

17. Structure selon l'une quelconque des revendications 13 à 16, **caractérisée en ce que** les montants latéraux (48a, 48b) de chaque élément de support (40a, 40b) comprennent des sièges (83, 87) destinés à venir en engagement par enclenchement avec un corps en forme de boîte (82) adapté pour définir une poche pouvant contenir un montant auxiliaire (90) respectif, une pluralité desdits montants auxiliaires (90) étant adaptée pour recevoir un filet (92) pour supporter les tiges des plantes reçues dans les récipients (12a, 12b, 12c) des plates-formes (10), ou une couverture laminaire amovible adapté pour définir une structure formant serre superposée aux plates-formes (10).

18. Structure selon l'une quelconque des revendications 1 à 17, **caractérisée en ce qu'**elle comprend des moyens de conditionnement thermique destinés à être associés à chacune desdites plates-formes (10) afin de chauffer ou de refroidir les plantes contenues dans lesdits récipients (12a, 12b, 12c).

19. Structure selon la revendication 18, **caractérisée en ce qu'**elle comprend des moyens de support qui peuvent être associés au-dessous desdites plates-formes (10) et qui sont adaptés pour supporter des tubes de chauffage, chaque plate-forme (10) ayant une série d'ouvertures verticales traversantes (32) aménagées au-dessus desdits tuyaux de chauffage, afin de permettre à l'air chauffé provenant desdits tuyaux de passer vers une zone situées au-dessus des plates-formes (10).

20. Structure selon la revendication 18, **caractérisée en ce qu'**elle comprend des trous formés dans les récipients (12c) desdites plates-formes (10), dans lesquels des tubes sont insérés, un fluide de refroidissement ou de chauffage étant introduit dans ces tubes afin but de chauffer ou de refroidir directement la terre contenue dans lesdits conteneurs (12c).

21. Structure selon l'une quelconque des revendications 13 à 20, **caractérisée en ce qu'**un élément formant conduit (55) est interposé entre lesdites plates-formes (10) et les moyens de support respectifs (34), qui est adapté pour collecter l'eau provenant de trous (13) formés en-dessous desdits récipients (12a, 12b, 12c).

22. Structure selon la revendication 21, **caractérisée en ce qu'**elle comprend des éléments formant gouttière (94) qui peuvent être associés au châssis (40a, 40b) des éléments de support (34) avec une pente réglable au moyen de formations de support à dents (96), afin de réaliser des canaux de drainage inclinés disposés au-dessous des trous traversants aménagés dans le fond desdits éléments formant conduit (55).
